# EUROPEAN PATENT APPLICATION

(11) **EP 4 509 776 A1**
(43) Date of publication of application: **19.02.2025**
(21) Application number: 22937521.7
(22) Date of filing: 24.11.2022
(51) Int. Cl.: F25B 41/40, B29C 69/02

(54) **METHOD FOR MANUFACTURING PLASTIC SILENCER, AND PLASTIC SILENCER**

(30) Priority: 11.04.2022 JP 2022065115
(71) Applicant: The Yokohama Rubber Co., Ltd., Hiratsuka-shi, Kanagawa 254-8601 (JP)
(72) Inventor: HOU, Gang, Hiratsuka-shi, Kanagawa 254-8601 (JP); KURIBAYASHI, Nobuaki, Hiratsuka-shi, Kanagawa 254-8601 (JP); KAJI, Satoshi, Hiratsuka-shi, Kanagawa 254-8601 (JP)
(74) Representative: Grünecker Patent- und Rechtsanwälte PartG mbB
(86) International application number: PCT/JP2022/043317
(87) International publication number: WO 2023/199546

(57) **Abstract**

Provided is a resin silencer that is to be connected to piping of an air conditioner for a vehicle, is lightweight, and has sufficient pressure resistance against internal pressure and a method of manufacturing a resin silencer. A resin insertion-side component (2) comprising a circumferential rib (10a) disposed protruding from an outer circumferential surface of a barrel portion (3), an insertion portion (4) on one end portion in an axial direction of the barrel portion (3), and a pipe portion (9) connected to the other end portion via an expanded pipe portion (8) and a resin receiving-side component (11) comprising a circumferential rib (21a) disposed protruding from an outer circumferential surface of a barrel portion (12), a receiving portion (13) on the other end portion in an axial direction of the barrel portion (12), and a pipe portion (20) connected to one end portion via an expanded pipe portion (19) are inserted into an annular groove (14) of the receiving portion (13), the barrel portions (3) and (12) joined by spin welding a joint portion between the insertion portion (4) and the annular groove (14) are made a cylindrical portion, and a cylindrical flow stopping wall portion (18) connected to an outer circumferential side of the joint portion with a gap and a cylindrical flow stopping wall portion (16) connected to an inner circumferential side of the joint portion with a gap are provided.

## Description

### Technical Field

The present invention relates to a method of manufacturing a resin silencer to be connected to piping of an air conditioner for a vehicle and a resin silencer.

### Background Art

A silencer is connected to piping of an air conditioner for a vehicle in order to suppress noise caused by a flow of a circulating refrigerant (see, for example, Patent Documents 1 and 2). The silencer is a cylindrical body having a diameter larger than that of piping to be connected and is formed mainly of metal.

With the reduction in weight of vehicles, a reduction in weight of piping has recently been demanded. When a silencer typically made of metal is made of resin to reduce the weight, it is necessary to ensure sufficient pressure resistance against the internal pressure applied by the flowing refrigerant. Since the silencer is connected to piping having a smaller diameter, it is necessary that the thickness changes from a cylindrical portion (barrel portion) having a larger diameter to piping it connects to. Depending on the degree of change in the thickness, excessive stress may be locally generated in the silencer where the internal pressure acts, and it may be difficult to ensure sufficient pressure resistance. Thickening a circumferential wall of a cylindrical silencer to have pressure resistance is disadvantageous for weight reduction. Thus, there is room for improvement in the manufacturing of a resin silencer that is both lightweight and has sufficient pressure resistance against internal pressure.

### Citation List

### Patent Literature

Patent Document 1: JP 11-6668 A
Patent Document 2: JP 2000-205701 A

### Summary of Invention

### Technical Problem

An object of the present invention is to provide a method of manufacturing a resin silencer that is to be connected to piping of an air conditioner for a vehicle, is lightweight, and has sufficient pressure resistance against internal pressure and a resin silencer.

### Solution to Problem

To achieve the object described above, a method of manufacturing a resin silencer according to an embodiment of the present invention is a method of manufacturing a resin silencer to be connected to piping of an air conditioner for a vehicle and includes: forming, via resin injection molding, an insertion-side component including an annular circumferential rib disposed protruding from an outer circumferential surface of a barrel portion having a cylindrical shape, an insertion portion on one end portion in an axial direction of the barrel portion, and a pipe portion with a smaller diameter than the barrel portion connected to the other end portion in the axial direction via an expanded pipe portion expanded in diameter toward the barrel portion and a receiving-side component including an annular circumferential rib disposed protruding from an outer circumferential surface of a barrel portion having a cylindrical shape, a receiving portion into which the insertion portion is inserted on the other end portion in an axial direction of the barrel portion, and a pipe portion with a smaller diameter than the barrel portion connected to one end portion in the axial direction via an expanded pipe portion expanded in diameter toward the barrel portion, the receiving portion including an annular groove into which the cylindrical insertion portion is inserted and a cylindrical flow stopping wall portion connected to an outer circumferential side of the annular groove with a gap; joining the barrel portion of the insertion-side component and the barrel portion of the receiving-side component to make an integrally formed cylindrical portion by causing a leading edge surface of the insertion portion inserted into the annular groove to be brought into contact with and pressed against a bottom surface of the annular groove; bringing an outer circumferential surface of the insertion portion into contact with an outer circumferential wall of the annular groove; putting an inner circumferential surface of the insertion portion an inner circumferential wall of the annular in a non-contact state with a gap therebetween; and rotating the insertion-side component and the receiving-side component relatively about an axial center to spin weld a contact portion between the insertion portion and the annular groove.

A resin silencer according to an embodiment of the present invention is a resin silencer to be connected to piping of an air conditioner for a vehicle and includes: a resin insertion-side component including an annular circumferential rib disposed protruding from an outer circumferential surface of a barrel portion having a cylindrical shape, an insertion portion on one end portion in an axial direction of the barrel portion, and a pipe portion with a smaller diameter than the barrel portion connected to the other end portion in the axial direction via an expanded pipe portion expanded in diameter toward the barrel portion; a resin receiving-side component including an annular circumferential rib disposed protruding from an outer circumferential surface of a barrel portion having a cylindrical shape, a receiving portion into which the insertion portion is inserted on the other end portion in an axial direction of the barrel portion, and a pipe portion with a smaller diameter than the barrel portion connected to one end portion in the axial direction via an expanded pipe portion expanded in diameter toward the barrel portion.

The insertion-side component and the receiving-side component are joined with the insertion portion inserted into the receiving portion, the barrel portion of the insertion-side component and the barrel portion of the receiving-side component integrally formed by the joining form a cylindrical portion, a cylindrical flow stopping wall portion connected to an outer circumferential side of a joint portion between the insertion portion and the receiving portion with a gap is provided, and a cylindrical flow stopping wall portion connected to an inner circumferential side of the joint portion with a gap is provided.

### Advantageous Effects of Invention

According to the present invention, the insertion-side component and the receiving-side component are joined to each other in a state in which the insertion portion is inserted into the receiving portion, allowing for obtaining a resin silencer in which the joined barrel portions are made a cylindrical portion. Since the cylindrical flow stopping wall portion connected to the outer circumferential side of the joint portion between the insertion portion and the receiving portion with a gap and the cylindrical flow stopping wall portion connected to the inner circumferential side of the joint portion with a gap are provided, burrs produced when the joint portion is joined are prevented from protruding to the inner circumferential surface and the outer circumferential surface of the silencer by the flow stopping wall portions, which is advantageous for stably and firmly joining the insertion-side component and the receiving-side component. Further, since each of the barrel portions and the pipe portions are connected to each other via the expanded pipe portions, it is possible to prevent excessive stress from being locally generated in a region between each of the barrel portions and the pipe portions when an internal pressure is applied. Further, since the circumferential rib protruding from the outer circumferential surface of each of the barrel portions resists the internal pressure, it is possible to prevent excessive stress from being locally generated in each of the barrel portions, the expanded pipe portions, and the joint portion. Thus, it is possible to obtain a silencer that ensures sufficient pressure resistance against internal pressure while also being made of a lightweight resin.

### Brief Description of Drawings

FIG. 1 is an explanatory diagram illustrating an embodiment of a silencer in a front view.
FIG. 2 is an explanatory diagram illustrating the silencer of FIG. 1 in a longitudinal cross-sectional view.
FIG. 3 is an enlarged explanatory diagram illustrating a joint portion of FIG. 2.
FIG. 4 is an explanatory diagram illustrating, in a front view, an insertion-side component and a receiving-side component forming the silencer of FIG. 1 in a separated state.
FIG. 5 is an explanatory diagram illustrating the insertion-side component and the receiving-side component of FIG. 4 in a longitudinal cross-sectional view.
FIG. 6 is an explanatory diagram illustrating, in a longitudinal cross-sectional view, the insertion-side component and the receiving-side component of FIG. 5 in a fitted state.
FIG. 7 is an enlarged explanatory diagram illustrating a fitted portion of FIG. 6.
FIG. 8 is a cross-sectional view taken along a line A-A of FIG. 6.
FIG. 9 is an explanatory diagram illustrating another embodiment of a silencer in a longitudinal cross-sectional view.
FIG. 10 is an explanatory diagram illustrating another embodiment of a silencer in a front view.
FIG. 11 is a cross-sectional view taken along a line B-B of FIG. 10.
FIG. 12 is an explanatory diagram illustrating another embodiment of a silencer in a front view.

### Description of Embodiments

A method of manufacturing a resin silencer and a resin silencer according to an embodiment of the present invention will be described based on the embodiments illustrated in the drawings.

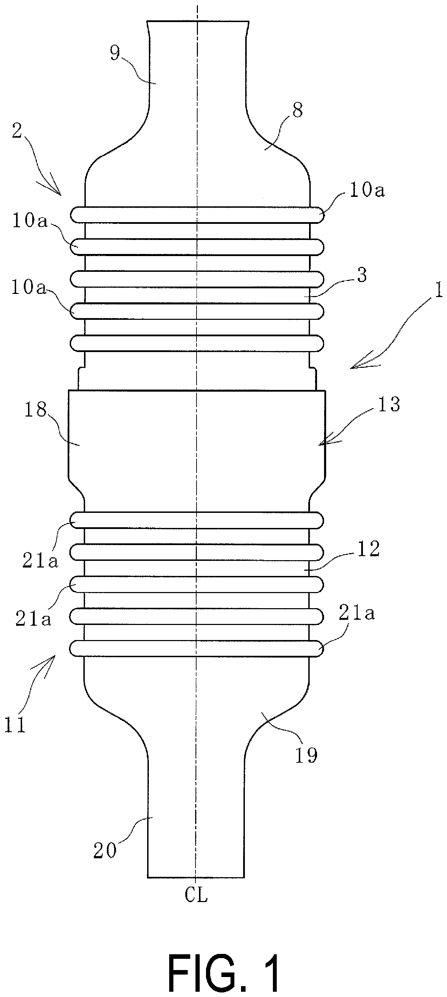

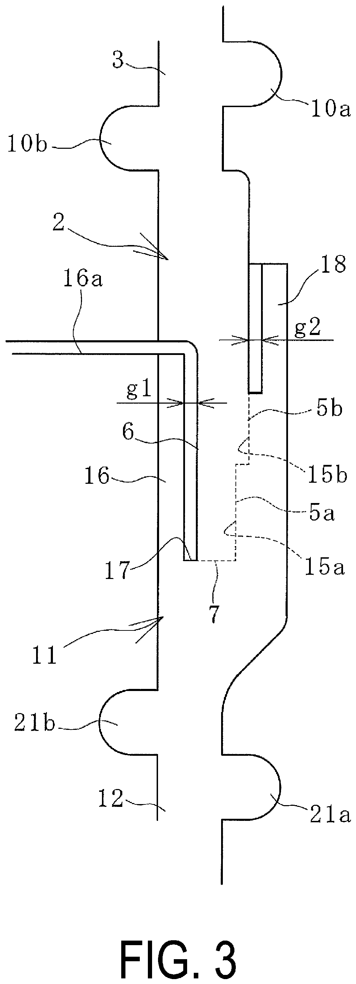

In the embodiments of a resin silencer 1 illustrated in FIGS. 1 to 3, pipe portions 9 and 20 having a smaller diameter than barrel portions 3 and 12 are connected to axial end portions of the cylindrical portions (barrel portions 3 and 12) via expanded pipe portions 8 and 19. Piping of an air conditioner for a vehicle is connected to the pipe portions 9 and 20. Inside the hollow silencer 1, a refrigerant C used in the air conditioner circulates and flows. The refrigerant C flows in from one pipe portion 9 and flows out from the other pipe portion 20. A dot-dash line CL in the diagrams indicates the axial center of the silencer 1 passing through the cross-sectional centers of the barrel portions 3 and 12, the expanded pipe portions 8 and 19, and the pipe portions 9 and 20. The extension direction of the axial center CL is the axial direction.

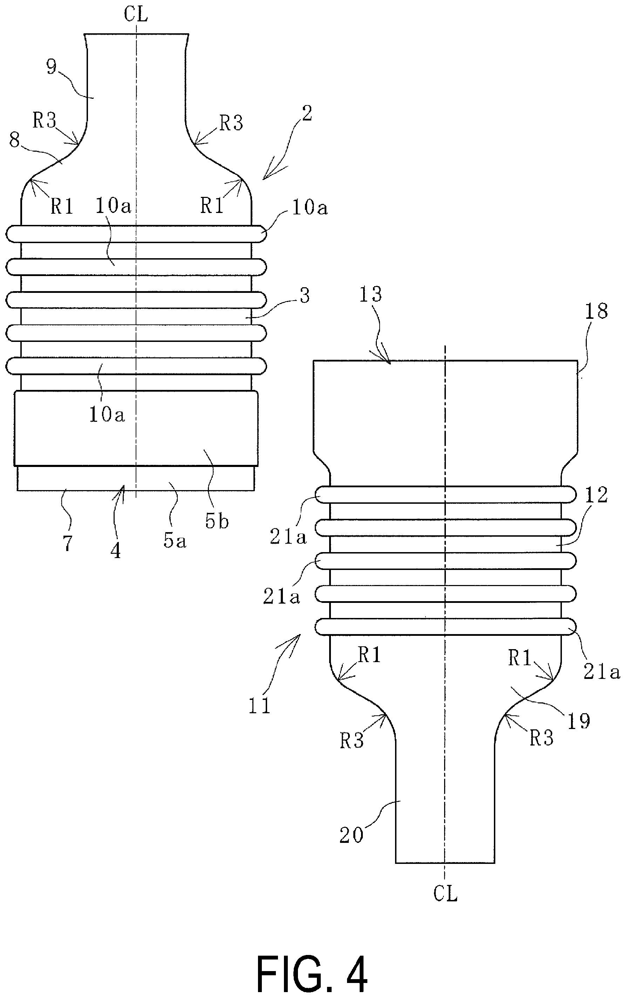

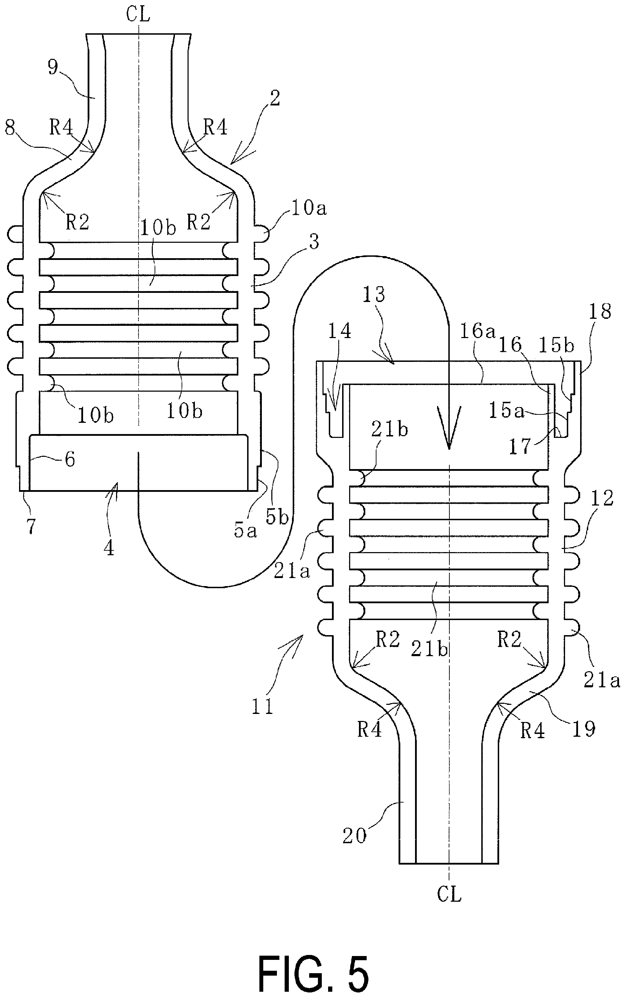

The silencer 1 is formed by joining and integrally forming the insertion-side component 2 made of resin and the receiving-side component 11 made of resin illustrated in FIGS. 4 and 5. The insertion-side component 2 and the receiving-side component 11 are basically formed of the same resin. As the resin forming the insertion-side component 2 and the receiving-side component 11, a known resin able to be injection molded is used. For example, a nylon resin (such as 66 nylon), polypropylene, an ABS resin, or the like may be used.

Short fibers (such as, for example, glass fibers or carbon fibers) for reinforcement can be mixed with the resin at a predetermined ratio (for example, 30 mass% or more and 40 mass% or less with respect to 100 parts by mass of the resin). The short fibers are sized to have, for example, an outer diameter of about 0.001 mm or more and 1.0 mm or less and a length of about 0.01 mm or more to 10 mm or less.

The insertion-side component 2 includes a barrel portion 3, an expanded pipe portion 8 and the pipe portion 9. The barrel portion 3 includes an insertion portion 4 at one end portion (lower end portion in the diagrams) in the axial direction and includes the expanded pipe portion 8 at the other end portion (upper end portion in the diagrams) in the axial direction. The expanded pipe portion 8 is a cylindrical body whose diameter expands from the pipe portion 9 toward the barrel portion 3, and the barrel portion 3 and the pipe portion 9 are connected to each other via the expanded pipe portion 8.

The inclination angle of the circumferential wall of the expanded pipe portion 8 with respect to the axial center CL is about, for example, 30° or more and 60° or less. Further, the boundary between the expanded pipe portion 8 and the barrel portion 3 is formed in a convex arc shape, and the arc radius (R1 dimension) of the outer surface of this boundary is about, for example, 10 mm or more and 20 mm or less. The arc radius (R2 dimension) of the inner surface of this boundary is set so that the thickness (the thickness of the outer surface and the inner surface) is constant. The boundary between the expanded pipe portion 8 and the pipe portion 9 is formed in a concave arc shape, and the arc radius (R3 dimension) of the outer surface of this boundary is about, for example, 10 mm or more and 20 mm or less. The arc radius (R4 dimension) of the inner surface of this boundary is set so that the thickness (the thickness of the outer surface and the inner surface) is constant. Thus, the cylindrical barrel portion 3 and the cylindrical pipe portion 9 are smoothly connected to each other by the expanded pipe portion 8 whose inner diameter and outer diameter are gradually changed.

On the outer circumferential surface of the barrel portion 3, a circumferential rib 10a that is continuous in the circumferential direction is provided in a protruding manner to reinforce the barrel portion 3. In this embodiment, a plurality of (five) circumferential ribs 10a are arranged at intervals in the axial direction, and the number thereof is, for example, in a range from 1 to 6. The circumferential ribs 10a are preferably arranged at equal intervals in the axial direction. Axial ribs 10 are arranged at least in the central portion in the axial direction of the barrel portion 3.

The protrusion height of the circumferential rib 10a (the amount of protrusion outward in the radial direction from the outer circumferential surface of the barrel portion 3) is about, for example, 2 mm or more and 5 mm or less, and the rib width is about, for example, 1 mm or more and 5 mm or less. The number and dimensions of the circumferential ribs 10a are appropriately determined on the basis of the pressure resistance required for the silencer 1.

In this embodiment, a circumferential rib 10b that is continuous in the circumferential direction is disposed in a protruding manner on the inner circumferential surface of the barrel portion 3. The circumferential rib 10b is mainly designed to improve the silencing effect, but also has an effect of reinforcing the barrel portion 3. In this embodiment, a plurality of (five) circumferential ribs 10b are arranged at intervals in the axial direction, but the number of circumferential ribs 10b is, for example, 1 or more and 6 or less. The circumferential ribs 10b are preferably arranged at equal intervals in the axial direction. Note that the circumferential ribs 10b may be optionally provided.

The protrusion height of the circumferential rib 10b (the amount of protrusion inward in the radial direction from the inner circumferential surface of the barrel portion 3) is about, for example, 2 mm or more and 5 mm or less, and the rib width is about, for example, 1 mm or more and 5 mm or less. The number and dimensions of the circumferential ribs 10b are appropriately determined on the basis of the silencing effect required for the silencer 1.

The cross-sectional shape of the circumferential ribs 10a and 10b is not limited to an arc-shaped top portion such as a semi-circular shape, and a triangular shape, a quadrangular shape, other polygonal shapes, or the like can be employed. Forming the top portion in an arc shape is advantageous for improving the durability of the circumferential ribs 10a and 10b.

It is desirable that the circumferential ribs 10a and the circumferential ribs 10b are arranged so as to be offset from each other in the axial direction as in this embodiment. That is, the circumferential ribs 10a and the circumferential ribs 10b may be arranged so as not to overlap each other in the axial direction. If the circumferential ribs 10a and the circumferential ribs 10b are arranged so as to overlap each other in the axial direction, the uneven distribution of the amount of the resins in the barrel portion 3 becomes excessive, which is disadvantageous for satisfactory injection molding.

The cylindrical insertion portion 4 includes outer circumferential walls 5a and 5b, an inner circumferential wall 6, and a leading end surface 7. The outer circumferential wall 5a has a smaller diameter than the outer circumferential wall 5b, and a boundary therebetween forms a step.

The receiving-side component 11 includes the barrel portion 12, the expanded pipe portion 19, and the pipe portion 20. The barrel portion 12 includes a receiving portion 13 at one end portion (lower end portion in the diagrams) in the axial direction and includes the expanded pipe portion 19 at the other end portion (upper end portion in the diagrams) in the axial direction. The barrel portion 12 and the pipe portion 20 are connected via the expanded pipe portion 19. On the outer circumferential surface of the barrel portion 12, a circumferential rib 21a that is continuous in the circumferential direction is provided in a protruding manner to reinforce the barrel portion 12. In this embodiment, a circumferential rib 21b that is continuous in the circumferential direction is disposed in a protruding manner on the inner circumferential surface of the barrel portion 12.

The insertion-side component 2 and the receiving-side component 11 are different in that the insertion-side component 2 and the receiving-side component 11 respectively have the insertion portion 4 and the receiving portion 13 but have substantially the same specification in other portions (the barrel portion 3 and the barrel portion 12, the expanded pipe portion 8 and the expanded pipe portion 19, the pipe portion 9 and the pipe portion 20, the circumferential rib 10a and the circumferential rib 21a, and the circumferential rib 10b and the circumferential rib 21b). The inner diameter of the barrel portions 3 and 12 is about, for example, 30 mm or more and 60 mm or less. The inner diameter of the pipe portions 9 and 20 is about, for example, 10 mm or more and 20 mm or less. The thicknesses of the circumferential wall of the barrel portions 3 and 12, the expanded pipe portions 8 and 19, and the pipe portions 9 and 20 are, for example, substantially equal to one another in a range from about 2 mm or more and 5 mm or less.

The receiving portion 13 includes an annular groove 14 and a cylindrical flow stopping wall portion 18 connected to the outer circumferential side of the annular groove 14 so as to be separated therefrom. The annular groove 14 includes the outer circumferential walls 15a and 15b, an inner circumferential wall 16, and a bottom surface 17. The outer circumferential wall 15a has a smaller diameter than the outer circumferential wall 15b, and a boundary therebetween forms a step.

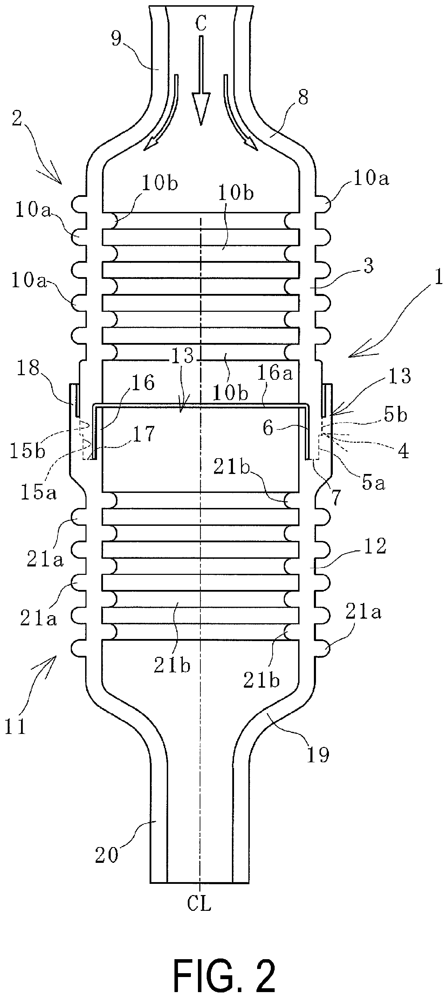

In the assembly 1, the insertion-side component 2 and the receiving-side component 11 are joined to each other in a state where the insertion portion 4 is inserted into the receiving portion 13. In FIG. 2, a joint portion between the insertion portion 4 and the receiving portion 13 is indicated by a thin dashed line. That is, the surfaces facing each other in a state where the insertion portion 4 is inserted into the receiving portion 13, specifically, the leading end surface 7 and the bottom surface 17, the outer circumferential wall 5a and the outer circumferential wall 15a, and the outer circumferential wall 5b and the outer circumferential wall 15b are joined to each other, respectively.

By this joining, the barrel portion 3 and the barrel portion 12 are integrally formed into one cylindrical portion. The cylindrical flow stopping wall portion 18 is connected to the outer circumferential side of the joint portion between the insertion portion 4 and the receiving portion 13 so as to be separated from each other with a gap g2 therebetween. The flow stopping wall portion 18 protrudes in the axial direction from the leading end surface of the outer circumferential wall 5b, and the amount of protrusion is, for example, 5 mm or more and 10 mm or less. On the inner circumferential side of the joint portion between the insertion portion 4 and the receiving portion 13, the cylindrical inner circumferential wall 16 which is separated from the joint portion with a gap g1 and functions as a flow stopping wall portion is connected. The amount of protrusion of the inner circumferential wall 16 from the bottom surface 17 in the axial direction is, for example, 10 mm or more and 15 mm or less. The gaps g1 and g2 are about, for example, 0.5 mm or more and 2 mm or less. A leading end surface 16a of the inner circumferential wall 16 and the insertion-side component 2 (insertion portion 4) are separated from each other with a gap.

Next, an example of a process for manufacturing the silencer 1 by a manufacturing method according to an embodiment of the present invention will be described.

First, the insertion-side component 2 and the receiving-side component 11 illustrated in FIGS. 4 and 5 are formed by resin injection molding. The insertion-side component 2 and the receiving-side component 11 may be injection molded by a known method using a known injection molding device. Thus, when the insertion-side component 2 and the receiving-side component 11 are injection molded, the circumferential ribs 10a, 10b, 21a, and 21b are also integrally formed at the same time.

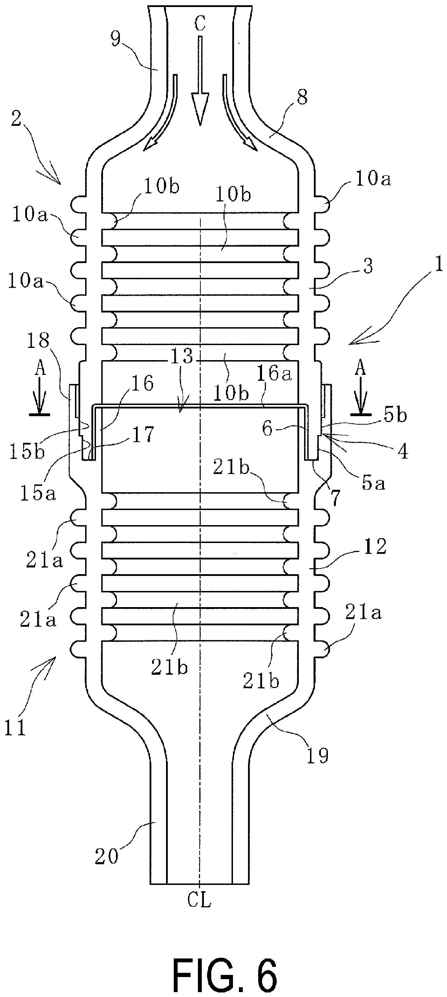

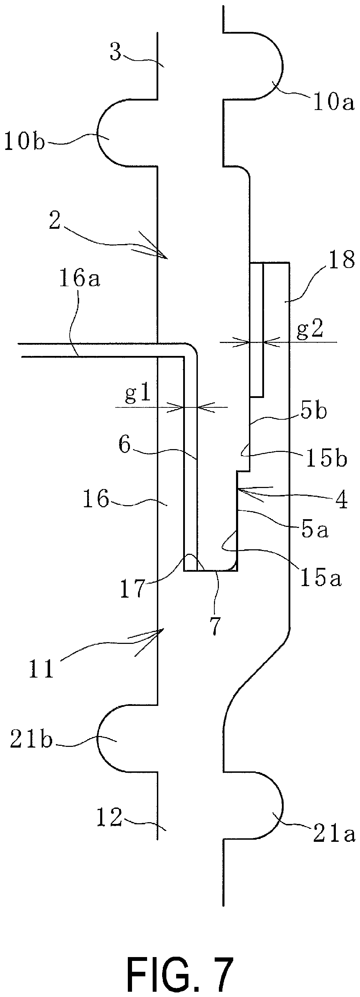

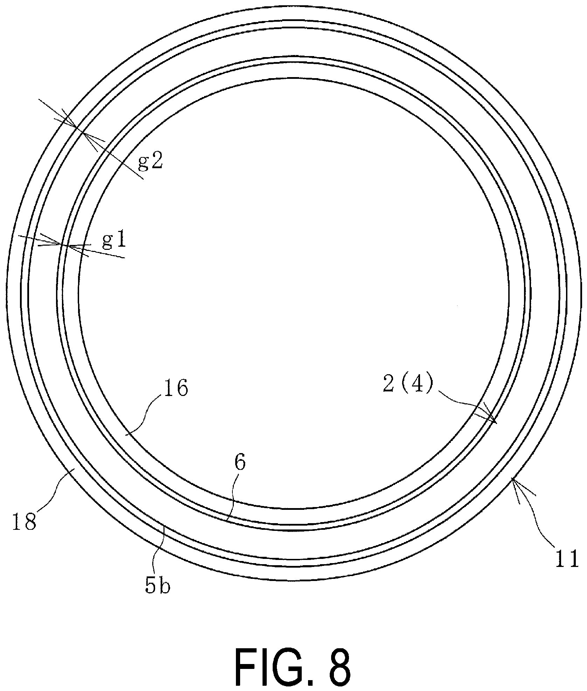

Next, as illustrated in FIGS. 6 to 8, the insertion portion 4 is inserted into and fitted to the receiving portion 13. More specifically, the receiving-side component 11 is fixed to a fixed portion of a spin welding machine, the insertion-side component 2 is fixed to a movable portion of the spin welding machine, and the insertion-side component 2 is moved downward to insert the insertion portion 4 into the annular groove 14 in a state in which the axial centers CL of the receiving-side component 11 and the insertion-side component 2 coincide with each other. A known spin welding machine may be used.

The leading end surface 7 of the insertion portion 4 is brought into contact with and pressed against the bottom surface 17 of the annular groove 14, the outer circumferential surface of the insertion portion 4 and the outer circumferential walls 15a and 15b of the annular groove 14 are brought into contact with each other, and the inner circumferential wall 6 of the insertion portion 4 is brought into a non-contact state with the inner circumferential wall 16 of the annular groove 14 with the gap g1 therebetween. The outer circumferential surface of the insertion portion 4 and the flow stopping wall portion 18 are brought into a non-contact state with the gap g2 therebetween.

Next, by rotating the insertion-side component 2 about the axial center CL in a state where the receiving-side component 11 is fixed at a predetermined position, the contact portion between the insertion portion 4 and the annular groove 14 is spin-welded. That is, the leading end surface 7 and the bottom surface 17, the outer circumferential wall 5a and the outer circumferential wall 15a, and the outer circumferential wall 5b and the outer circumferential wall 15b are respectively welded and joined. In this manner, the barrel portion 3 of the insertion-side component 2 and the barrel portion 12 of the receiving-side component 11 are joined to be made one cylindrical portion. The receiving-side component 11 can also be rotated about the axial center CL in a state where the insertion-side component 2 is fixed at a predetermined position, and the insertion-side component 2 and the receiving-side component 11 are relatively rotated about the axial center CL to be spin-welded.

For the spin rotation speed and the pressing force (the downward movement amount of the insertion-side component 2) for pressing the leading end surface 7 against the bottom surface 17 of the annular groove 14 at the time of spin welding, an appropriate range in which satisfactory welding can be performed is obtained via a preliminary test. Then, spin welding may be performed by setting the spin rotation speed and the pressing force in the appropriate ranges.

The silencer 1 illustrated in FIGS. 1 to 3 is manufactured by joining and integrally forming the insertion-side component 2 and the receiving-side component 11 by spin welding in this manner. On the outer circumferential side of the joint portion between the insertion portion 4 and the receiving portion 13 (the leading end surface 7 and the bottom surface 17, the outer circumferential wall 5a and the outer circumferential wall 15a, and the outer circumferential wall 5b and the outer circumferential wall 15b), the cylindrical flow stopping wall portion 18 which protrudes upward and is connected and separated by the gap g2 blocks the flow of melted resin at the time of joining via spin welding. Accordingly, burrs produced by solidification of the melted resin are prevented from protruding from the outer circumferential surface of the silencer 1 (the barrel portions 3 and 12). Further, since the cylindrical inner circumferential wall 16 connected to the inner circumferential side of the joint portion with the gap g1 therebetween also functions as a flow stopping wall portion, the flow of the melted resin at the time of joining via spin welding is blocked. Accordingly, burrs produced by solidification of the melted resin are prevented from protruding from the inner circumferential surface of the silencer 1 (the barrel portions 3 and 12).

That is, burrs produced at the time of joining are accommodated in the gaps g1 and g2 and do not protrude to the outside of the flow stopping wall portion 18 and the inside of the inner circumferential wall 16. This eliminates the need for deburring, reduces the possibility of failure at the joint starting from burrs, and is advantageous in stably and strongly joining the insertion-side component 2 and the receiving-side component 11.

In addition, since the barrel portions 3 and 12 and the pipe portions 9 and 20 are connected to each other via the expanded pipe portions 8 and 19, it is possible to prevent an excessive stress from being locally generated in the region between the barrel portion 3 and the pipe portions 9 and 20 and the region between the barrel portion 12 and the pipe portion 20 when internal pressure is applied during use of the silencer 1. Furthermore, the circumferential ribs 10a and 21a protruding from the outer circumferential surfaces of the respective barrel portions 3, 12 counteract the internal pressure acting on the silencer 1. Thus, it is possible to prevent excessive stress from being locally generated in the barrel portions 3 and 12, the expanded pipe portions 8 and 19, and the joint portions. Thus, according to the silencer 1, it is possible to ensure sufficient pressure resistance against the internal pressure while also being made of a lightweight resin.

As illustrated in FIG. 2, the refrigerant C flows in from one pipe portion 9, passes through the expanded pipe portion 8, the barrel portions 3 and 12, and the expanded pipe portion 19, flows out from the other pipe portion 18, and circulates. The refrigerant C flows along the inner circumferential surfaces of the expanded pipe portions 8 and 19. In this embodiment, the flowing refrigerant C is interfered with by the circumferential ribs 10b and 21b protruding from the inner circumferential surfaces of the barrel portions 3 and 12, so that noise and pulsation caused by the flowing refrigerant C are canceled out, and noise and pulsation can be further reduced.

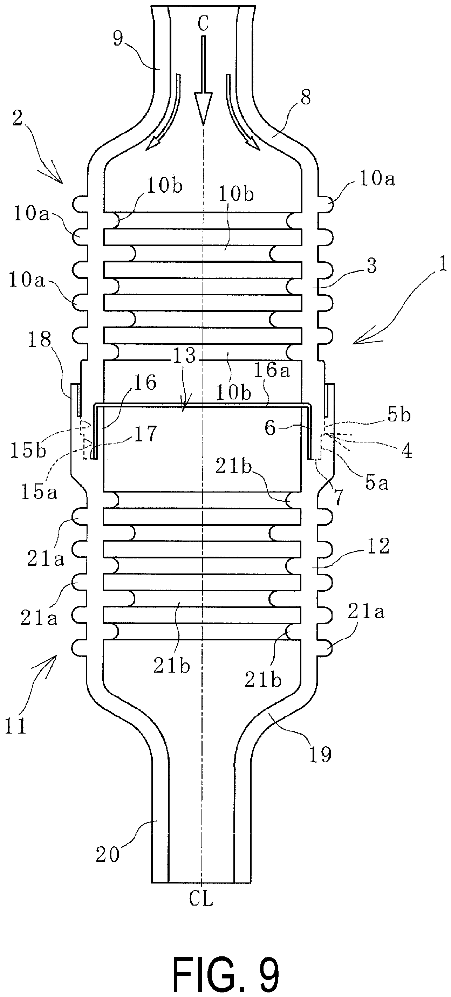

As illustrated in FIG. 9, the circumferential ribs 10b and 21b having different protrusion heights may be arranged side by side in the axial direction. The circumferential ribs 10b and 21b are not limited to protruding in a direction orthogonal to the axial direction as in the above-described embodiment and may protrude at an incline toward one side (pipe portion 20 side) in the axial direction.

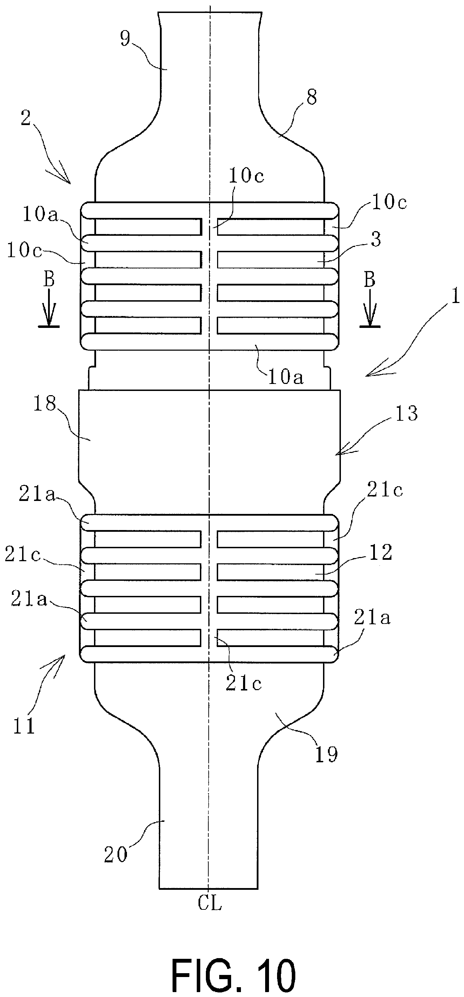

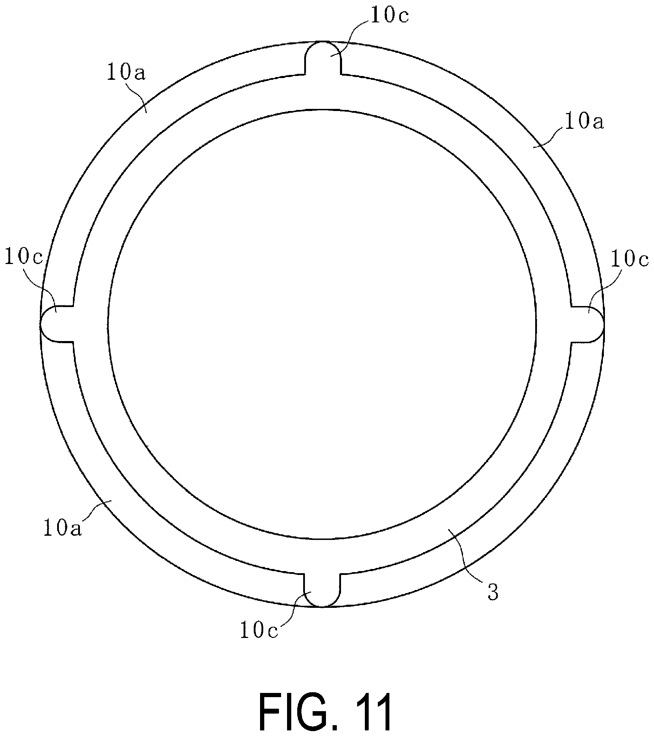

As illustrated in FIGS. 10 and 11, in addition to the circumferential ribs 10a and 21a, axial ribs 10c and 21c extending in the axial direction may be provided on the outer circumferential surfaces of the barrel portions 3 and 12. The axial ribs 10c and 21c are integrally formed at the same time when the insertion-side component 2 and the receiving-side component 11 are injection molded. The axial ribs 10c and 21c have substantially the same specification.

The axial ribs 10c and 21c are disposed at least in the central portion in the axial direction of the barrel portions 3 and 12 and are preferably disposed in the range in which the circumferential ribs 10a and 21a are disposed. The protruding heights and rib widths of the axial ribs 10c and 21c are equal to those of the circumferential ribs 10a and 21a. Three or more axial ribs 10c and 21c are arranged at equal intervals in the circumferential direction, and three to twelve axial ribs are preferable. Further, it is preferable that the axial rib 10c and the axial rib 21c are circumferentially aligned with each other in terms of position.

Having a specification including the axial ribs 10c and 21c in addition to the circumferential ribs 10a and 21a is advantageous in further improving the durability of the barrel portions 3 and 12 (silencer 1).

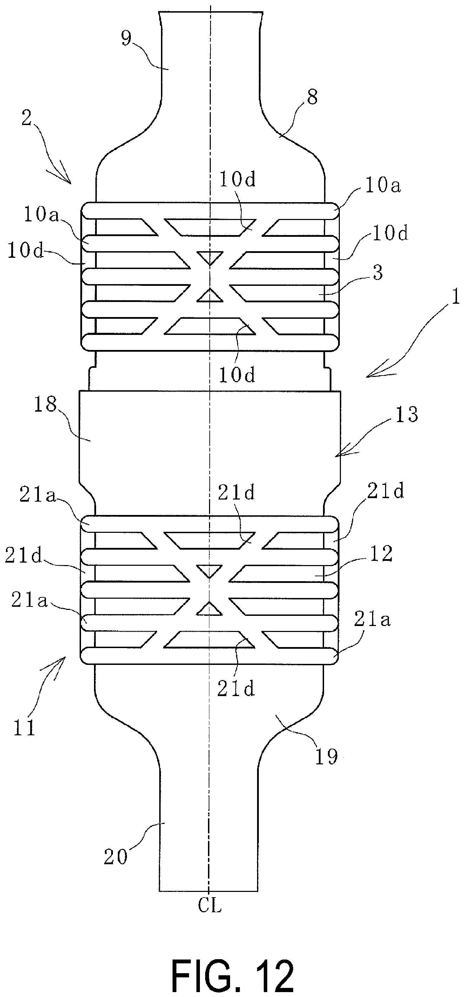

Instead of the axial ribs 10c and 21c illustrated in FIG. 10, as illustrated in FIG. 12, a specification in which inclined ribs 10d and 21d extending inclined at, for example, 30° or more and 60° or less with respect to the axial direction is disposed protruding from the outer circumferential surfaces of the barrel portions 3 and 12 can be adopted. The inclined ribs 10d and 21d are integrally formed at the same time when the insertion-side component 2 and the receiving-side component 11 are injection molded. The inclined ribs 10d and 21d have substantially the same specification. The protruding heights and rib widths of the inclined ribs 10d and 21d are equal to those of the circumferential ribs 10a and 21a.

The insertion-side component 2 and the receiving-side component 11 are not limited to being joined by spin welding, and another known method may be used. For example, the insertion-side component 2 and the receiving-side component 11 can be joined and integrally formed by high-frequency welding, hot plate welding, ultrasonic welding, or the like.

### Reference Signs List

1 Silencer
2 Insertion-side component
3 Barrel portion (cylindrical portion)
4 Insertion portion
5a, 5b Outer circumferential wall
6 Inner circumferential wall
7 Leading end surface
8 Expanded pipe portion
9 Pipe portion
10a, 10b Circumferential rib
10c Axial rib
10d Inclined rib
11 Receiving-side component
12 Barrel portion (cylindrical portion)
13 Receiving portion
14 Annular groove
15a, 15b Outer circumferential wall
16 Inner circumferential wall (flow stopping wall portion)
17 Bottom surface
18 Flow stopping wall portion
19 Expanded pipe portion
20 Pipe portion
21a, 21b Circumferential rib
21c Axial rib
21d Inclined rib
C Refrigerant

## Claims

1. A method of manufacturing a resin silencer to be connected to piping of an air conditioner for a vehicle, the method comprising:
forming, via resin injection molding,
an insertion-side component comprising an annular circumferential rib disposed protruding from an outer circumferential surface of a barrel portion having a cylindrical shape, an insertion portion on one end portion in an axial direction of the barrel portion, and a pipe portion with a smaller diameter than the barrel portion connected to the other end portion in the axial direction via an expanded pipe portion expanded in diameter toward the barrel portion and
a receiving-side component comprising an annular circumferential rib disposed protruding from an outer circumferential surface of a barrel portion having a cylindrical shape, a receiving portion into which the insertion portion is inserted on the other end portion in an axial direction of the barrel portion, and a pipe portion with a smaller diameter than the barrel portion connected to one end portion in the axial direction via an expanded pipe portion expanded in diameter toward the barrel portion;
the receiving portion comprising an annular groove into which the cylindrical insertion portion is inserted and a cylindrical flow stopping wall portion connected to an outer circumferential side of the annular groove with a gap,
joining the barrel portion of the insertion-side component and the barrel portion of the receiving-side component to make an integrally formed cylindrical portion by causing a leading edge surface of the insertion portion inserted into the annular groove to be brought into contact with and pressed against a bottom surface of the annular groove, bringing an outer circumferential surface of the insertion portion into contact with an outer circumferential wall of the annular groove, putting an inner circumferential surface of the insertion portion and an inner circumferential wall of the annular in a non-contact state with a gap therebetween, and rotating the insertion-side component and the receiving-side component relatively about an axial center to spin weld a contact portion between the insertion portion and the annular groove.

2. The method of manufacturing a resin silencer according to claim 1, comprising:
disposing an axial rib extending in the axial direction protruding from an outer circumferential surface of the insertion-side component via the resin injection molding; and
disposing an axial rib extending in the axial direction protruding from an outer circumferential surface of the receiving-side component via the resin injection molding.

3. The method of manufacturing a resin silencer according to claim 1 or 2, comprising:
disposing an annular circumferential rib protruding from an inner circumferential surface of the barrel portion of the insertion-side component via the resin injection molding; and
disposing an annular circumferential rib protruding from an inner circumferential surface of the barrel portion of the receiving-side component via the resin injection molding.

4. The method of manufacturing a resin silencer according to claim 3, comprising:
disposing the circumferential rib disposed protruding from the outer circumferential surface of the barrel portion of the insertion-side component and the circumferential rib disposed projecting from the inner circumferential surface offset in the axial direction; and
disposing the circumferential rib disposed protruding from the outer circumferential surface of the barrel portion of the receiving-side component and the circumferential rib disposed protruding from the inner circumferential surface offset in the axial direction.

5. A resin silencer to be connected to piping of an air conditioner for a vehicle, the resin silencer comprising:
a resin insertion-side component comprising an annular circumferential rib disposed protruding from an outer circumferential surface of a barrel portion having a cylindrical shape, an insertion portion is provided on one end portion in an axial direction of the barrel portion, and a pipe portion with a smaller diameter than the barrel portion is connected to the other end portion in the axial direction via an expanded pipe portion with a diameter that expands toward the barrel portion;
a resin receiving-side component comprising an annular circumferential rib disposed protruding from an outer circumferential surface of a barrel portion having a cylindrical shape, a receiving portion into which the insertion portion is inserted on the other end portion in an axial direction of the barrel portion, and a pipe portion with a smaller diameter than the barrel portion connected to one end portion in the axial direction via an expanded pipe portion expanded in diameter toward the barrel portion,
the insertion-side component and the receiving-side component being joined with the insertion portion inserted into the receiving portion,
the barrel portion of the insertion-side component and the barrel portion of the receiving-side component integrally formed by the joining forming a cylindrical portion,
a cylindrical flow stopping wall portion connected to an outer circumferential side of a joint portion between the insertion portion and the receiving portion with a gap being provided, and
a cylindrical flow stopping wall portion connected to an inner circumferential side of the joint portion with a gap being provided.
